(19) Europäisches Patentamt
European Patent Office
Office européen des brevets

(11) **EP 1 654 824 B1**

(12) **EUROPEAN PATENT SPECIFICATION**

(45) Date of publication and mention
of the grant of the patent:
**18.03.2009 Bulletin 2009/12**

(21) Application number: **05748483.4**

(22) Date of filing: **01.06.2005**

(51) Int Cl.:
*H04L 1/06* (2006.01)   *H04L 1/00* (2006.01)

(86) International application number:
**PCT/JP2005/010440**

(87) International publication number:
**WO 2005/125074 (29.12.2005 Gazette 2005/52)**

(54) **METHOD FOR ALLOCATING DATA RATES TO LAYERS IN A MULTIPLE INPUT, MULTIPLE OUTPUT COMMUNICATIONS SYSTEM**

VERFAHREN ZUR ZUWEISUNG VON DATENRATEN ZU SCHICHTEN IN EINEM KOMMUNIKATIONSSYSTEM MIT MEHREREN EIN- UND AUSGÄNGEN

PROCÉDÉ D'ALLOCATION DE DÉBITS DE DONNÉES AUX COUCHES D'UN SYSTÈME DE COMMUNICATION À PLUSIEURS ENTRÉES ET PLUSIEURS SORTIES

(84) Designated Contracting States:
**DE FR GB**

(30) Priority: **21.06.2004 US 872578**

(43) Date of publication of application:
**10.05.2006 Bulletin 2006/19**

(73) Proprietor: **MITSUBISHI DENKI KABUSHIKI KAISHA**
**Tokyo 100-8310 (JP)**

(72) Inventors:
• **DU, Jianxuan**
**02478 (US)**
• **MOLISCH, Andreas, F.; 438 Massachusetts**
**02474 (US)**
• **ZHANG, Jinyun; 170 Gore Street, Apt. 616,**
**02141 (US)**

(74) Representative: **Pfenning, Meinig & Partner GbR**
**Patent- und Rechtsanwälte**
**Theresienhöhe 13**
**80339 München (DE)**

(56) References cited:
**WO-A-01/45300**          **WO-A-02/091657**

• **G.LEVIN,S.LOYKA: "Statistical analysis of a measured MIMO channel" CANADIAN CONFERENCE ON ELECTRICAL AND COMPUTER ENGINEERING, NIAGARA FALLS, ONT., CANADA, vol. 2, 2 May 2004 (2004-05-02), pages 875-878 Vol.2, XP002347809 (IEEE Cat. No. 04CH37513) IEEE Piscataway, NJ, USA ISBN: 0-7803-8253-6**

## Description

Technical Field

This invention relates generally to multiple-input, multiple-output communication systems, and more particularly to allocating data rates to layers in MIMO systems.

Background of the Invention

A general architecture for multiple-input, multiple-output (MIMO) communications systems is well known, E. Telatar, "Capacity of multi-antenna Gaussian channels," European Tansactions on Telecommunications, vol. 10, pp. 585-595, Nov-Dec. 1999, and G. J. Foschini and M. J. Gans, "On the limits of wireless communications in a fading environment when using multiple antennas," Wireless Personal Commun., vol. 6, pp. 315-335, March 1998. However, it is still a problem to develop practical systems based on the MIMO architecture that approach a theoretical channel capacity.

MIMO systems can use closed-loop or open-loop architectures. In a closed-loop system, the transmitter uses feedback information from the receiver to determine data rates based on instantaneous channel conditions. This improves the system's capacity but increases the complexity, overhead and cost of the system. In an open-loop system, the transmitter does not require instantaneous feedback from the receiver to determine data rates. Therefore, it is preferred to use an open-loop architecture.

In space-time coded systems, one method uses bit interleaved coded modulation (BICM), B. M. Hochwald and S. ten Brink, "Achieving near-capacity on a multiple-antenna channel," IEEE Trans. Wireless Commun., vol. 51, pp. 389-399, March 2003. BICM uses list sphere decoding and iterative channel decoding to approach the capacity of MIMO channels for low and medium data rate transmission with a moderate number of transmit antennas. However, for a large number of transmit antennas and high order modulation, the limited size of the list used in the sphere decoding severely degrades performance.

Another method for MIMO systems uses vertical Bell Laboratory layered space-time structure (V-BLAST), G. J. Foschini, "Layered space-time architecture for wireless communication in a fading environment when using multi-element antennas," Bell Labs Technical Journal, pp. 41-59, August 1996, P. W. Wolniansky, G. J. Foschini, G. D. Golden, and R. A. Valenzuela, "V-BLAST: An architecture for realizing very high data rate over the rich-scattering wireless channel," Proc. URSI Int. Symp. Signals, Systems, and Electronics, pp. 295-300, October 1998, and H. E. Gamal and J. A. R. Hammons, "A new approach to layered space-time coding and signal processing," IEEE Trans. Inform. Theory, vol. 47, pp. 2321-2334, September 2001.

In V-BLAST, the input data stream is demultiplexed to multiple substreams or 'layers'. Each layer is encoded independently using one-dimensional encoding, and each encoded layer is sent concurrently via a different antenna to receiver antennas.

To detect each layer in the receiver, a linear processing according to zero-forcing (ZF) or minimum mean square-error (MMSE) criteria can be used to null undetected layers in the received signal. The contribution of detected layers is subtracted by decision-directed successive interference cancellation (SIC).

In a V-BLAST system, the input data stream is typically divided evenly into the layers, and all layers have an identical data rate. As a result, the layers, which are detected first, are more prone to error due to a loss of signal energy by the nulling. Therefore, the prior art V-BLAST system does not approach the theoretical channel capacity, even with an optimal ordering of the detection.

Also known from prior art (G. Levin, S. Loyka, "Statistical Analysis of a Measured MIMO Channel" CCECE 2004-CCGEI 2004) is a method for the statistical analysis of MIMO channels, wherein the channel characteristics, such as outage capacity, is statistically analysed. To analyse the distribution of the outage capacity, a Gaussian model is used.

Finally, the prior art also knows a MIMO transmission method, WO 02/091657 A1, between a receiver and a transmitter having more than one antenna. A feedback channel is used in this method to send control information to the transmitter depending on the receive situation. The link quality of the subsignals is therein determined and transmitted via the feedback channel in order to change the properties of the subsignals in the transmitter, e.g. the rate.

Therefore, there is a need for an open-loop MIMO system that approaches the theoretical channel capacity for high data rates or for a large number of antennas.

Disclosure of Invention

It is an objective of the invention to allocate data rate according to quality of channels for the layers. Layers to be detected first have lower data rates because those layers have a lower quality channel due to the nulling of undetected layers.

The invention provides a MIMO system that uses a layered structure with unequal rate allocation. Instead of allocating the data rates among the layers equally, or according to instantaneous data rate feedback in a closed loop system, the invention uses statistical information of the channel based on past observations to determine the data rate allocated to each layer.

Brief Description of the Drawings

Figure 1 is a block diagram of a transmitter for a layered MIMO system according to the invention;

Figure 2 is a block diagram of a receiver for the layered MIMO system according to the invention; and

Figure 3 is a flow diagram of a method for allocating data rates among layers according to the invention;

Best Mode for Carrying Out the Invention

Transmitter Structure

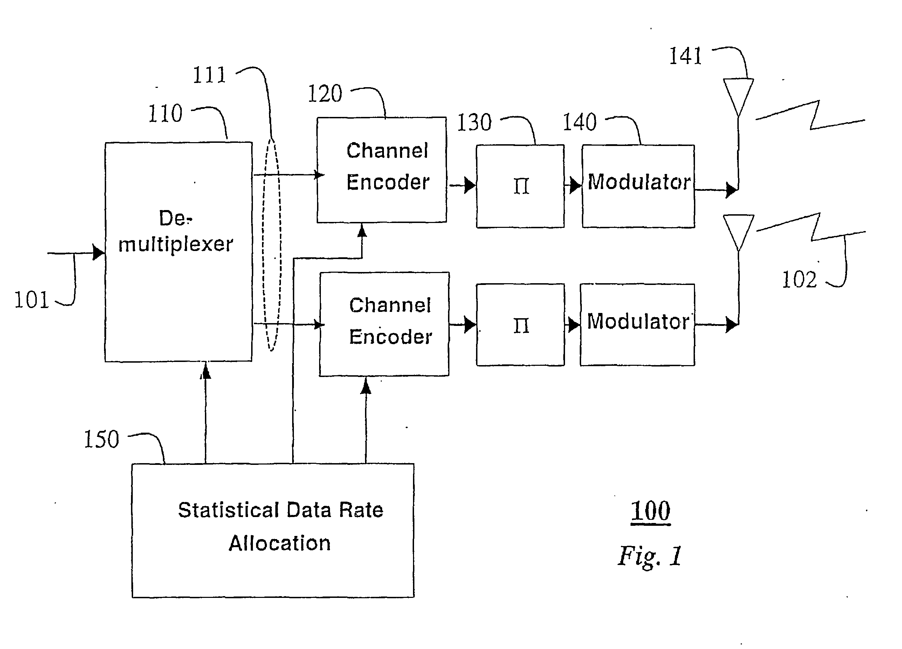

Figure 1 shows a transmitter 100 for a layered MIMO system according to the invention. An input data stream 101 is demultiplexed 110 to $N_t$ substreams or 'layers' 111. Each layer is encoded 120 independently. The encoded layers are interleaved (II) 130 and modulated 140 and sent concurrently to different transmit antennas 141 to be transmitted as transmit signals 102 through a channel. In the example shown, $N_t = 2$, although it should be understood that any practical number of transmit and receive antennas can be used with the invention.

The demultiplexing 110 and encoding 120, according to the invention, use a statistical rate allocation 150 as described herein. The statistics are based on past observations of the layer capacities, as opposed to instantaneous feedback.

Receiver Structure

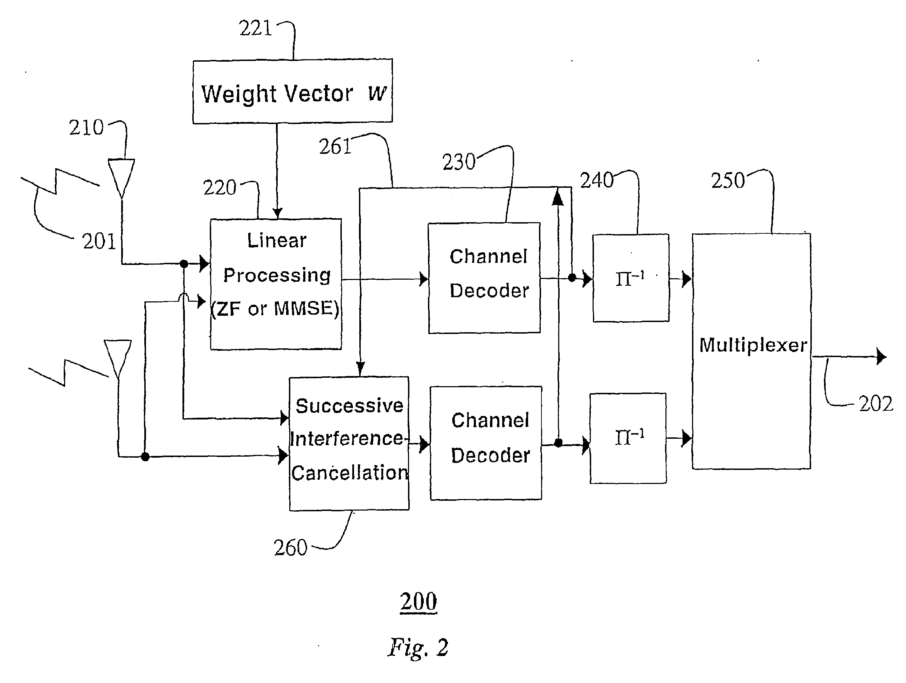

Figure 2 shows a receiver 200 in the layered MIMO system according to the invention. Signals 201 are received by Nr receive antennas 210. Linear processing 220 is applied to null undetected layers. The processed signals are decoded 230, and de-interleaved (II-1) 240 before sent to the multiplexer 250 where the decoded layers are combined into a reconstructed output signal 202 corresponding to the input signal 101. Successive interference-cancellation 260, in the receiver, is according to decision feedback information 261.

System Model

In a flat-fading MIMO system with $N_t$ transmit antennas and Nr receive antennas, a relationship between transmitted signals 102 and received signals 201 can be expressed as

$$\mathbf{r} = \mathbf{Hs} + \mathbf{n},$$

where r is a $N_r \times 1$ vector representing the received signals 201, s is a $N_t \times 1$ vector representing the transmitted signals 102, and H is a $N_r \times N_t$ channel matrix representing an impulse response of the channel. A $N_r \times 1$ noise vector n has entries that are independent and identically distributed (i.i.d.) zero-mean circular complex Gaussian random variables with a variance $N_0$.

An open-loop channel capacity is given by

$$C(\mathbf{H}, SNR) = \log_2 \det\left( \mathbf{I}_{N_r} + \frac{SNR}{N_t} \mathbf{HH}^H \right),$$

where $\mathbf{I}_{N_r}$ is a $N_r \times N_r$ identity matrix, and SNR is the signal-to-noise ratio.

Without loss of generality, we assume that each layer 1 111 is sent via transmit antenna 1 141, and the order of detection is from 1 to $N_t$. Then, at the receiver 200, layer i is decoded 230, based on $z_i$ determined as follows,

$$z_i = \mathbf{w}_i^H \left( \mathbf{r} - \sum_{l=1}^{i-1} \mathbf{h}_l \hat{s}_l \right),$$

where the $N_r \times 1$ unit-norm weight vector $\mathbf{w}_i$ 221 nulls 220 signals from all other undecoded layers. The weight vector 221 is determined according to zero-forcing or MMSE criterion. The reconstructed signals 261 from decoded layers are $\hat{s}_l$. The value $\mathbf{h}_l$ is the 1 th column of the channel matrix H.

After the linear processing 220 and the interference cancellation 260, layer i is decoded 230 using a one-dimensional code.

Data Rate Allocation for Layered Systems

In the MIMO system, the optimal data rate to be allocated to layer 1 should be

$$C_l = \log_2 \det \left( \mathbf{I}_{N_r} + \frac{SNR}{N_t} \mathbf{H}_{(l-1)} \mathbf{H}_{(l-1)}^H \right) - \log_2 \det \left( \mathbf{I}_{N_r} + \frac{SNR}{N_t} \mathbf{H}_{(l)} \mathbf{H}_{(l)}^H \right), \qquad (1)$$

where $\mathbf{H}_{(l)} = \llcorner \mathbf{h}_{l+1} \ \mathbf{h}_{l+2} \cdots \mathbf{h}_{N_t} \lrcorner$, and $\mathbf{h}_l$ is the 1 th column of the channel matrix H.

The capacity of a MIMO channel such as the first and the second term in the equation (1), whether Rayleigh or Ricean, can be approximated accurately by a Gaussian distribution, at medium and high SNRs, P. J. Smith and M. Shafi, "On a Gaussian approximation to the capacity of wireless MIMO systems," Proc. ICC 2002, pp. 406-410, April 2002, M. A. Kamath, B. L. Hughes, and X. Yu, "Gaussian approximations for the capacity of MIMO Rayleigh fading channels," IEEE Asilomar Conference on Signals, Systems, and Computers, November 2002.

Thus, the capacity of each layer $C_l$ is also Gaussian distributed, and can be denoted by

$$C_l \sim N\left( \eta_l, \sigma_l^2 \right),$$

where $\eta_l$ and $\sigma_l^2$ are the mean and variance of the capacity of layer 1, respectively. The important point here is that the capacity is expressed statistically, instead of being based on actual capacity derived from instantaneous feedback information. It should also be noted that other statistics, such as a Gamma distribution and higher order statistics, can be used express the capacity of the channel.

In our MIMO system, instead of dynamically changing the data rate for each layer, we fix layer 1 to a data rate $u_l$, which is based on the means and variances of all the layer capacities, i.e., first and second order statistics. Minimizing a probability of not achieving a required performance, i.e., the outage probability Pout, of a layered system is equivalent to maximizing a probability

$$1 - P_{out} = \prod_{l=1}^{M} \int_{u_l}^{\infty} \frac{1}{\sqrt{2\pi}\sigma_l} e^{-\frac{(t-\eta_l)^2}{2\sigma_l^2}} \, dt,$$

when no layer has a data rate greater than the respective capacity of the layer, and subject to the constraint that a total data rate CT of the channel is fixed, i.e.,

$$\sum_{l=1}^{M} u_l = C_T .$$

Let the data rate of a layer be a difference $x_l = u_l - \eta_l$. By setting up an equivalent Lagrangean objective function, we find a stationary point, that is, a point where a derivative of the function vanishes, from the objective function

$$J = \log\left(\prod_{l=1}^{M}\int_{x_l}^{\infty}\frac{1}{\sqrt{2\pi}\sigma_l}e^{-\frac{t^2}{2\sigma_l^2}}dt\right) - \lambda\left(\sum_{l=1}^{M}x_l + \sum_{l=1}^{M}\eta_l - C_T\right) .$$

We can verify that the stationary point satisfies

$$-\frac{e^{-\frac{x_l^2}{2\sigma_l^2}}}{\int_{x_l}^{\infty}\frac{1}{\sqrt{2\pi}\sigma_l}e^{-\frac{t^2}{2\sigma_l^2}}dt} = \lambda, \qquad l = 1,2,\cdots,M .$$

because

$$\int_{x_l}^{\infty}\frac{1}{\sqrt{2\pi}\sigma_l}e^{-\frac{t^2}{2\sigma_l^2}}dt \approx 1, \qquad x_l/\sigma_l << 0 .$$

Therefore, the difference between the optimum data rate and the mean of the capacity of a layer is

$$x_l^* \approx \frac{\sigma_l}{\sum_{m=1}^{M}\sigma_m}\left(C_T - \sum_{m=1}^{M}\eta_m\right) ,$$

and an optimum data rate u* for the layer 1 is

$$u_l^* \approx \eta_l + \frac{\sigma_l}{\sum_{m=1}^{M}\sigma_m}\left(C_T - \sum_{m=1}^{M}\eta_m\right) . \qquad (2)$$

Therefore, the outage probability for each layer is

$$P_l^* = \int_{-\infty}^{x_l} \frac{1}{\sqrt{2\pi}\sigma_l} e^{-\frac{t^2}{2\sigma_l^2}} dt = \int_{-\infty}^{\frac{\left(C_T - \sum_{m=1}^{M} \eta_m\right)}{\sum_{m=1}^{M} \sigma_m}} \frac{1}{\sqrt{2\pi}} e^{-\frac{t^2}{2}} dt \quad,$$

which is the same for all layers. Thus, a minimum total outage probability is achieved when the outage probability of each layer is identical.

We define a normalized capacity margin as

$$\varphi \stackrel{\Delta}{=} \frac{\left(\sum_{m=1}^{M} \eta_m - C_T\right)}{\sum_{m=1}^{M} \sigma_m} \quad. \tag{3}$$

Then, an optimum total outage probability is

$$P_{out}^* = 1 - \prod_{l=1}^{M}\left(1 - P_l^*\right) = 1 - \left(\int_{-\varphi}^{\infty} \frac{1}{\sqrt{2\pi}} e^{-\frac{t^2}{2}} dt\right)^M \quad,$$

which states an interesting fact. The minimum total outage probability of a layered system is uniquely determined by the normalized capacity margin.

That is, if we properly select the data rate for each layer, the sum of capacities of all layers, with perfect SIC, is exactly the same as that obtained by instantaneous feedback. To achieve that capacity, instantaneous data rate feedback is needed. However, if the channel is ergodic enough, such as those with enough frequency selectivity or time variation, we can approach that capacity by statistically determining the data rate for each layer, with a small penalty. Our approach is to minimize the overall outage probability given the total data rate. Because of the results above, we use a statistical approach for allocating bits to different layers.

We use an asymptotic expansion according to M. A. Kamath, B. L. Hughes, and X. Yu, "Gaussian approximations for the capacity of MIMO Rayleigh fading channels," IEEE Asilomar Conference on Signals, Systems, and Computers, November 2002, which is

$$\int_{\varphi}^{\infty} \frac{1}{\sqrt{2\pi}} e^{-\frac{t^2}{2}} dt \approx \sqrt{2\pi} - \frac{e^{-\frac{x^2}{2}}}{x}\left(1 - \frac{1}{x^2} + \frac{1\cdot 3}{\left(x^2\right)^2} \cdots\right), \quad x \ll 0 \quad,$$

then

$$P_{out}^* \approx \frac{M}{\sqrt{2\pi}\varphi} e^{-\varphi^2/2} \quad.$$

Similarly, we derive an asymptotic outage probability of the MIMO channel with the total overall data rate $C_T$ as

$$P_{ch} \approx \frac{1}{\sqrt{2\pi}\varphi_{ch}} e^{-\phi_{ch}^2/2} ,$$

where

$$\varphi_{ch} = \frac{\eta_{ch} - C_T}{\sigma_{ch}} ,$$

where $\eta_{ch}$ is an ergodic MIMO channel capacity, i.e., every sequence or sizable sample is equally representative of the whole as in regard to a statistical parameter, and $\sigma_{ch}^2$ is the variance of the MIMO channel capacity. Note that

$$\eta_{ch} = \sum_{l=1}^{M} \eta_l ,$$

and

$$\sigma_{ch} \leq \sum_{l=1}^{M} \sigma_l ,$$

because

$$E\left\{\left(\sum_l v_l\right)^2\right\} \leq \left(\sum_l \sqrt{E\{v_l^2\}}\right)^2 ,$$

for any set of random variables $\{v_l\text{'s}\}$.

Thus,

$$\varphi_{ch} \leq \varphi ,$$

and

$$P_{out} \geq P_{out}^{*} \approx \frac{M}{\sqrt{2\pi}\varphi}e^{-\varphi^2/2} \geq M\frac{1}{\sqrt{2\pi}\varphi_{ch}}e^{-\varphi_{ch}^2/2} \approx MP_{ch}$$ ,

which implies that with the identical data rates, the asymptotic outage probability of the layered structure is at least M times that of the MIMO channel.

Because of the above results, we provide a statistical method for determining the data rate allocation, subject to the following constraints.

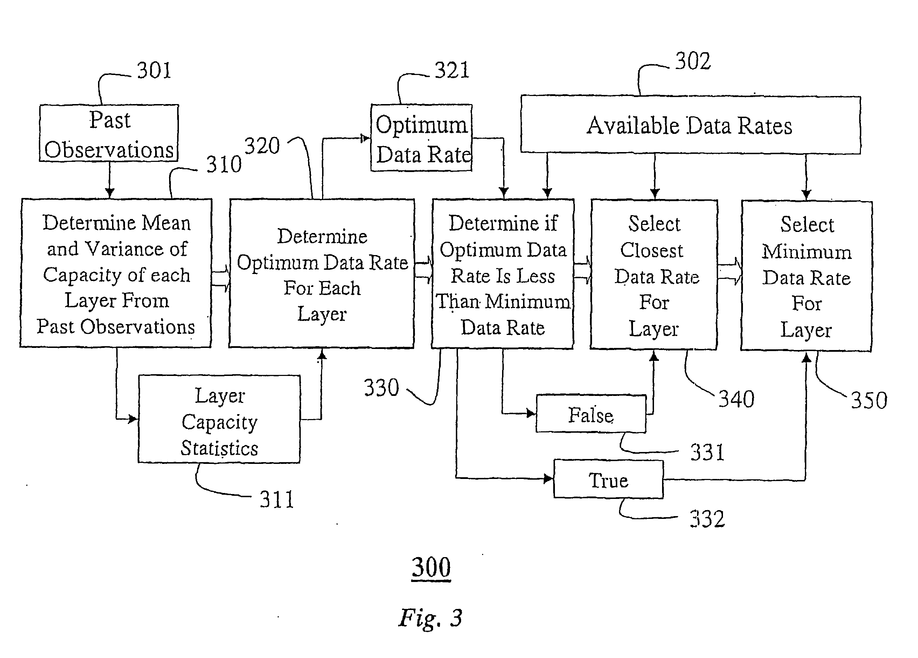

In practical communication systems, there are only a limited number of combinations of modulation and coding rate. Therefore, a set of N available data rates $c_1 < c_2 < \cdots < c_N$ 302 is discrete, see Figure 3. Here, the data rates are arranged in a low to high order, where cl is a minimum available data rate and cN is a maximum available data rate of the set.

Any Gaussian distribution has a negative tail, therefore, our analysis above applies primarily to systems with a high SNR, where an optimum data rate $u_l^{*}$ of each layer is guaranteed to be positive.

Statistical Data Rate Allocation Method

Figure 3 shows our method 300 for allocating data rates among multiple layer in a MIMO communications system.

First, we determine 310 statistics 311, e.g., a mean $\eta_l$ and a variance $\sigma_l^2$ of a capacity of each layer based on past observations 301 of capacities of layers as the layers were transmitted through a channel, as given by Equation (1). The means and variances can be determined entirely in the transmitter, based on signals sent from the receiver as acknowledgement to transmitted messages. It should be noted that other statistics can be used.

It should be made clear, that the statistics do not need to be based on instantaneous actual channel condition, but rather the statistics can be based only on historical data.

In the beginning of transmission, where no historical data are available, empirically derived statistics can be used to set the initial data rates for the layers. The empirical data can be obtained from experiments or simulation using standard channel models.

For a total data rate $C_T$, determine 320, for each layer, an optimum data rate $u_l^{*}$ 321 according to Equation (2), based on the layer capacity statistics 311 of each layer.

Determine 330 if the optimum data rate $u_l^{*}$ is less than a minimum data rate of a set of available data rates 302.

If false 331, then select 340 a closest data rate $c_l^{*}$ of the available data rates 302 that is less than the optimum data rate $u_l^{*}$.

Otherwise, if true 332, then select 350 the data rate $c_l^{*}$ to be a minimum of the set of available data rates.

Note in the system described, we may use different modulations for different layers depending on the chosen data rates.

Variations

The approach proposed above can also be applied to the cases where the association of transmit antennas with layers varies, or is frequency-selective such as in OFDM systems. We only have to sum up all the data rates as given by Equation (1) for each layer and determine the corresponding mean and variance of the channel capacity for each layer.

Although the invention has been described by way of examples of preferred embodiments, it is to be understood that various other adaptations and modifications may be made within the scope of the invention. Therefore, it is the object of the appended claims to cover all such variations and modifications as come within the scope of the invention.

**Claims**

1. A method for allocating data rates to layers (111) to be transmitted as transmit signals by $N_t$ transmitting antennas (141) in a multiple input, multiple output communications system, comprising:

   demultiplexing (110) an input data stream into multiple layers (111);
   determining (310), for each layer, statistics representing a capacity of the layer based on past observations of transmitting the layer through a channel, wherein when no past observations are available, empirically derived statistics are used;
   determining (320), for each layer, an optimum data rate based on a constraint when a total data rate of the channel is fixed by minimizing an outage probability by using the statistics; and
   determining (330), for each layer, if the optimum data rate is less than a minimum data rate of a set of available bit rates;
   if true, selecting (350), for a particular layer, the minimum data rate from the set of available data rates; and otherwise
   if false, selecting (340), for the particular layer, a closest data rate from the set of available data rates that is less than the optimum data rate,

   wherein a relationship between transmitted signals and received signals is expressed by $r=Hs+n$, where r is a $N_r{\times}1$ vector representing the received signals, s is a $N_t{\times}1$ vector representing the transmitted signals, and H is a $N_r{\times}N_t$ channel matrix representing an impulse response of the channel, and n is a $N_r{\times}1$ noise vector with entries that are independent and identically distributed, zero-mean circular complex Gaussian random variables with a variance

   $N_0$, and an open-loop capacity of the channel is $C(H,SNR) = \log_2 \det\left( I_{N_r} + \dfrac{SNR}{N_t} HH^H \right)$, where $I_N$ is a $N_r{\times}N_r$

   identity matrix, and SNR is a signal-to-noise ratio.

2. The method of claim 1, in which the optimal data rate to be allocated to each layer 1 is

   $$C_l = \log_2 \det\left( I_{N_r} + \frac{SNR}{N_t} H_{(l-1)}H_{(l-1)}{}^H \right) - \log_2 \det\left( I_{N_r} + \frac{SNR}{N_t} \bar{H}_{(l)}H_{(l)}{}^H \right), \quad \text{where } H_{(l)} = \llcorner h_{l+1} \; h_{l+2} \; \cdots \; h_{N}\lrcorner,$$

   and $h_l$ is an 1th column of the channel matrix H.

3. The method of claim 2, in which the capacity of each layer, based on the past observations is Normal or Gaussian distributed, $C_l \sim N(\eta_l, \sigma_l^2)$, where $\eta_l$ and $\sigma_l^2$ are the mean and variance of the capacity of layer 1, respectively.

4. The method of claim 1, in which the statistics are first and second order statistics.

5. The method of claim 1, in which an overall outage probability is minimized for a total data rate for all the layers (111).

6. The method of claim 1, in which the statistics are a mean and a variance of the capacity of each layer (111).

7. The method of claim 1, in which the statistics are determined in a transmitter (100) transmitting the transmit signals corresponding to the layers (111).

8. The method of claim 1, in which the statistics are determined in a receiver (200) receiving the transmit signals corresponding to the layers (111).

9. The method of claim 1, in which an association of transmit antennas (141) with the layers (111) varies.

10. The method of claim 1, in which the system is frequency-selective.

**11.** The method of claim 1, in which the statistics are modelled by a Gaussian distribution.

**Patentansprüche**

**1.** Verfahren zum Zuweisen von Datenraten zu Schichten (111), die als Übertragungssignale durch $N_t$ Sendeantennen (141) in einem Kommunikationssystem mit mehreren Eingängen und mehreren Ausgängen zu übertragen sind, welches aufweist:

Demultiplexieren (110) eines Eingangsdatenstroms in mehrere Schichten (111);
Bestimmen (310), für jede Schicht, von Statistiken, die eine Kapazität der Schicht auf der Grundlage von vergangenen Beobachtungen des Übertragens der Schicht durch einen Kanal darstellen, wobei, wenn keine vergangenen Beobachtungen verfügbar sind, empirisch abgeleitete Statistiken verwendet werden;
Bestimmen (320), für jede Schicht, einer optimalen Datenrate auf der Grundlage einer Randbedingung, wenn eine Gesamtdatenrate des Kanals festgelegt ist, durch Minimieren einer Ausfallwahrscheinlichkeit durch Verwendung der Statistiken; und
Bestimmen (330), für jede Schicht, ob die optimale Datenrate geringer als eine minimale Datenrate eines Satzes von verfügbaren Bitraten ist; wenn dies der Fall ist, Auswählen (350), für eine bestimmte Schicht, der minimalen Datenrate aus dem Satz von verfügbaren Datenraten; und anderenfalls,
wenn dies nicht der Fall ist, Auswählen (340), für die bestimmte Schicht, eine nächstliegende Datenrate aus dem Satz von verfügbaren Datenraten, die niedriger als die optimale Datenrate ist,

wobei eine Beziehung zwischen gesendeten Signalen und empfangenen Signalen ausgedrückt wird durch r=Hs+n, wobei r ein $N_r$xl-Vektor ist, der die empfangenen Signale darstellt, s ein $N_t$xl-Vektor ist, der die gesendeten Signale darstellt, und H eine $N_r$x$N_t$-Kanalmatrix ist, die eine Impulsantwort des Kanals darstellt, und n ein $N_r$xl-Störvektor ist mit Eingaben, die unabhängig und identisch verteilt, zirkulare komplexe gaußsche Zufallsvariablen mit Mittelwert 0 und einer Varianz $N_0$ sind, und eine Kapazität des offenen Kanals beträgt

$$C(H,SNR) = \log_2 \det\left( I_{N_r} + \frac{SNR}{N_t} HH^H \right),$$

wobei $I_N$ eine $N_r$x$N_r$-Identitätsmatrix ist und SNR ein Störabstand ist.

**2.** Verfahren nach Anspruch 1, bei dem die jeder Schicht l zuzuweisende optimale Datenrate gleich

$$C_l = \log_2 \det\left( I_{N_r} + \frac{SNR}{N_t} H_{(l-1)} H_{(l-1)}{}^H \right) - \log_2 \det\left( I_{N_r} + \frac{SNR}{N_t} H_{(l)} H_{(l)}{}^H \right)$$

ist, worin $H_{(l)}=\lfloor h_{l+1}\ h_{l+2}\ ...\ h_{Nt}\rfloor$ ist, und $h_l$ eine l-te Spalte der Kanalmatrix H ist.

**3.** Verfahren nach Anspruch 2, bei dem die Kapazität jeder Schicht, basierend auf den vergangenen Beobachtungen normal oder mit gaußscher Verteilung ist, $C_l \sim N(\eta_l, \sigma_l^2)$, worin $\eta_l$ und $\sigma_l^2$ der Mittelwert bzw. die Varianz der Kapazität der Schicht 1 sind.

**4.** Verfahren nach Anspruch 1, bei dem die Statistiken Statistiken erster und zweiter Ordnung sind.

**5.** Verfahren nach Anspruch 1, bei dem eine Gesamtausfallwahrscheinlichkeit für eine Gesamtdatenrate für alle Schichten (111) minimiert ist.

**6.** Verfahren nach Anspruch 1, bei dem die Statistiken ein Mittelwert und eine Varianz der Kapazität jeder Schicht (111) sind.

**7.** Verfahren nach Anspruch 1, bei dem die Statistiken in einem Sender (100) bestimmt sind, der die Übertragungssignale entsprechend den Schichten (111) sendet.

8. Verfahren nach Anspruch 1, bei dem die Statistiken in einem Empfänger (200) bestimmt werden, der die Übertragungssignale entsprechend den Schichten (111) empfängt.

9. Verfahren nach Anspruch 1, bei dem eine Assoziation von Sendeantennen (141) mit den Schichten (111) variiert.

10. Verfahren nach Anspruch 1, bei dem das System frequenzselektiv ist.

11. Verfahren nach Anspruch 1, bei dem die Statistiken durch eine gaußsche Verteilung modelliert sind.


**Revendications**

1. Procédé pour attribuer des taux de données à des couches (111) pour être transmis en tant que signaux de transmission par Nt antennes de transmission (141) dans un système de communication à entrées multiples et sorties multiples, comprenant les étapes consistant à :

   - démultiplexer (110) un flux de données d'entrée en de multiples couches (111) ;
   - déterminer (310), pour chaque couche, des statistiques représentant une capacité de la couche en fonction d'observations passées de transmission de la couche à travers un canal et, si aucune observation passée n'est disponible, utiliser des statistiques dérivées empiriquement ;
   - déterminer (320), pour chaque couche, un taux de données optimal en fonction d'une contrainte lorsqu'un taux de données total du canal est fixé en minimisant une probabilité d'indisponibilité en utilisant les statistiques ; et
   - déterminer (330), pour chaque couche, si le taux de données optimal est inférieur à un taux de données minimal d'un ensemble de taux de bits disponibles ;
   - si tel est le cas, choisir (350), pour une couche particulière, le taux de données minimal dans l'ensemble des taux de données disponibles ; et autrement
   - si tel n'est pas le cas, choisir (340), pour la couche particulière, un taux de données le plus proche dans l'ensemble des taux de données disponibles qui est inférieur au taux de données optimal ;
   - dans lequel la relation entre les signaux transmis et les signaux reçus est exprimée par $r=Hs+n$, où r est un vecteur $N_r x1$ représentant les signaux reçus, s est un vecteur $N_t x1$ représentant les signaux émis, et H est une matrice de canaux $N_r x N_t$ représentant un réponse d'impulsion du canal, et n est un vecteur de bruit $N_r x1$ avec des entrées qui sont des variables aléatoires Gaussiennes complexes circulaires de moyenne nulle, indépendantes et réparties identiquement, et ayant une variance $N_0$, et une capacité de boucle ouverte du canal est

$$C(H, \text{SNR}) = \log_2 \det\left(I_{N_r} + \frac{\text{SNR}}{\text{N}_t} HH^H\right),$$ où $I_N$ est une matrice d'identité $N_r \times N_r$, et SNR est un rapport signal sur bruit.

2. Procédé selon la revendication 1, dans lequel le taux de données optimal devant être attribué à chaque couche 1 est

$$C_l = \log_2 \det\left(I_{N_r} + \frac{\text{SNR}}{\text{N}_t} H_{(l-1)} H_{(l-1)}^H\right) - \log_2 \det\left(I_{N_r} + \frac{\text{SNR}}{\text{N}_t} H_{(l)} H_{(l)}^H\right)$$

où $H_{(l)} = {}_L h_{1+1}, h_{1+2}, \dots h_{Nt}\rrbracket$, et $h_l$ est la 1<sup>ème</sup> colonne de la matrice de canaux H.

3. Procédé selon la revendication 2, dans lequel la capacité de chaque couche, en fonction des observations passées, est distribuée de manière Normale ou Gaussienne, $C_l \sim N(\eta_l, \sigma_l^2)$, où $\eta_l$ et $\sigma_l^2$ sont respectivement la moyenne et la variance de la capacité de la couche 1.

**4.** Procédé selon la revendication 1, dans lequel les statistiques sont des statistiques de premier et de second ordres.

**5.** Procédé selon la revendication 1, dans lequel une probabilité d'indisponibilité globale est minimisée pour un taux de données total pour toutes les couches (111).

**6.** Procédé selon la revendication 1, dans lequel les statistiques sont une moyenne et une variance de la capacité de chaque couche (111).

**7.** Procédé selon la revendication 1, dans lequel les statistiques sont déterminées dans un émetteur (100) émettant les signaux d'émission correspondant aux couches (111).

**8.** Procédé selon la revendication 1, dans lequel les statistiques sont déterminées dans un récepteur (200) recevant les signaux d'émission correspondant aux couches (111).

**9.** Procédé selon la revendication 1, dans lequel une association des antennes d'émission (141) avec les couches (111) varie.

**10.** Procédé selon la revendication 1, dans lequel le système est sélectif en termes de fréquences.

**11.** Procédé selon la revendication 1, dans lequel les statistiques sont modélisées par une distribution Gaussienne.

*Fig. 1*

100

EP 1 654 824 B1

**200**

*Fig. 2*

EP 1 654 824 B1

300

*Fig. 3*

EP 1 654 824 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02091657 A1

### Non-patent literature cited in the description

- **E. TELATAR.** Capacity of multi-antenna Gaussian channels. *European Tansactions on Telecommunications,* November 1999, vol. 10, 585-595
- **G. J. FOSCHINI ; M. J. GANS.** On the limits of wireless communications in a fading environment when using multiple antennas. *Wireless Personal Commun.,* March 1998, vol. 6, 315-335
- **B. M. HOCHWALD ; S. TEN BRINK.** Achieving near-capacity on a multiple-antenna channel. *IEEE Trans. Wireless Commun.,* 2003, vol. 51, 389-399
- **G. J. FOSCHINI.** Layered space-time architecture for wireless communication in a fading environment when using multi-element antennas. *Bell Labs Technical Journal,* August 1996, 41-59
- **P. W. WOLNIANSKY ; G. J. FOSCHINI ; G. D. GOLDEN ; R. A. VALENZUELA.** V-BLAST: An architecture for realizing very high data rate over the rich-scattering wireless channel. *Proc. URSI Int. Symp. Signals, Systems, and Electronics,* October 1998, 295-300
- **H. E. GAMAL ; J. A. R. HAMMONS.** A new approach to layered space-time coding and signal processing. *IEEE Trans. Inform. Theory,* September 2001, vol. 47, 2321-2334
- **G. LEVIN ; S. LOYKA.** Statistical Analysis of a Measured MIMO Channel. *CCECE 2004-CCGEI,* 2004
- **P. J. SMITH ; M. SHAFI.** On a Gaussian approximation to the capacity of wireless MIMO systems. *Proc. ICC 2002,* April 2002, 406-410
- **M. A. KAMATH ; B. L. HUGHES ; X. YU.** Gaussian approximations for the capacity of MIMO Rayleigh fading channels. *IEEE Asilomar Conference on Signals, Systems, and Computers,* November 2002